# EUROPEAN PATENT SPECIFICATION

(11) **EP 1 845 691 B1**
(45) Date of publication and mention of the grant of the patent: **12.08.2015**
(21) Application number: 07251598.4
(22) Date of filing: 13.04.2007
(51) Int. Cl.: H04L 29/06

(54) **Media stream relay device and method**
Medienstromrelaisvorrichtung und -verfahren
Dispositif et procédé de relais de train de données

(30) Priority: 13.04.2006 JP 2006111027
(43) Date of publication of application: 17.10.2007
(73) Proprietor: NEC Corporation, Minato-ku Tokyo 108-8001 (JP)
(72) Inventor: Nakazawa, Tatsuya, Tokyo (JP); Ozawa, Kazunori, Tokyo (JP)
(74) Representative: MacDougall, Alan John Shaw

(56) References cited:
- EP-A- 1 349 344
- JP-A- 2004 109 244
- US-A1- 2003 152 105
- US-A1- 2005 129 006
- SCHULZRINNE H., CASNER S., FREDERICK R., JACOBSON V.: "RTP: A transport Protocol for Real-Time Applcations" RFC 3550, [Online] July 2003 (2003-07), XP000863820 Retrieved from the Internet: URL:http://www.rfc-editor.org/rfc/rfc3550. txt> [retrieved on 2007-07-04]
- SJOBERG J., WESTERLUND M., LAKANIEMI A., XIE Q.: "Real-Time Transport Protocol (RTP) Payload Format and File Storage Format for the Adaptive Multi-Rate (AMR) and Adaptive Multi-Rate Wideband (AMR-WB) Audio Codecs"[Online] June 2002 (2002-06), XP002440919 Retrieved from the Internet: URL:http://www.rfc-editor.org/rfc/rfc3267. txt> [retrieved on 2007-06-21]

## Description

### BACKGROUND OF THE INVENTION

### 1. Field of the Invention

The present invention is used in relaying media streams between a circuit switching network and a packet switching network, and more particularly relates to a method of processing intermittently transmitted audio packets, such as where only audio packets containing sound are transmitted, while audio packets containing silence are not transmitted.

### 2. Description of Related Art

There has been an amazing diffusion of VoIP (Voice over IP) communications for transmitting and receiving encoded audio data as packet information based on RTP (Real-time Transport Protocol) (see Non-patent Document 1) in packet communication networks that communicate using data packets. In recent years, developments have been made not only in audio data communications but also in two-way communication services and distribution services for a plurality of media streams such as video, text and file transfer.

Developments have also been made in media communication services between different communication networks, in which case a relay device is required for terminating the communication protocol of both networks and realizing media communication between terminals at both ends. This is also the case when realizing media communications between media communication terminals existing on both a circuit switching network and a packet switching network, for example.

With circuit switching networks, in contrast to packet switching networks, the encoded streams of a plurality of media are often multiplexed and sent to the destination device as one piece of multiplexed data, rather than the encoded media streams being transmitted and received individually. The destination device realizes communication by separating the received multiplexed data into the encoded streams of the individual media, and decoding the encoded streams according to the respective media. Particularly with audio, continuous transmission of encoded audio streams is required to avoid sound cut outs and the like.

It can be readily anticipated that an increase in the bandwidth and the number of packets exchanged on packet switching networks will naturally occur as the number of concurrent users and available types of media increase with further diffusion of communication services that use packets into the future. In such cases, packet congestion or packet loss may arise in networks through which the packets pass, resulting in an inevitable deterioration in visual and sound quality for media such as video and audio.

With the above use applications, the relay device connecting a circuit switching network and a packet switching network needs to realize media communication that minimizes the bandwidth and the number of packets on the packet switching network, while realizing continuous transmission of media streams on the circuit switching network.

Focusing now on the audio encoding system, there are encoding systems that generate encoded audio streams while changing the encoding efficiency depending on whether the audio is sound or silence. Specifically, this involves greatly reducing the data size of encoded streams for silent intervals. Also, depending on the method used, it is possible to generate surrounding background noise information (hereinafter, this background noise information is referred to as noise) either periodically or when information is updated, in order to alleviate the unnaturalness of complete silence in encoding long intervals of silence.
Patent Document 1: JP 2004-109244A
Non-patent Document 1: Schulzrinne, H., Casner, S., Frederick, R., Jacobson, V, "RTP: A Transport Protocol for Real-Time Applications", RFC 3550, July 2003, URL: http://www.rfc-editor.org/rfc/rfc3550.txt (available through the following link: http://www.ietf.org/)
Non-patent Document 2: Sjoberg, J., Westerlund, M., Lakaniemi, A., Xie Q., "Real-Time Transport Protocol (RTP) Payload Format and File Storage Format for the Adaptive Multi-Rate (AMR) and Adaptive Multi-Rate Wideband (AMR-WB) Audio Codecs", RFC 3267, June 2002, URL: http://www.rfc-editor.org/rfc/rfc3267.txt (available through the following link: http://www.ietf.org/)

### SUMMARY OF THE INVENTION

With packet switching networks, as aforementioned, it is desirable to inhibit the factors contributing to packet congestion or packet loss, and to perform communication after having limited packet transmission for encoded audio streams representing silence as much as possible even though the encoded data size transmitted is small. At the same time, it is generally conceivable to provide a statically or dynamically adjustable buffer in the destination device, in order to absorb fluctuations in the arrival of packets that occur with packet switching networks. However, with intermittent transmission where audio packets representing silence are not transmitted or where the audio encoding system periodically generates noise information (see Non-patent Document 2), it is surmised that the aforementioned buffer will often become exhausted, making it difficult to appropriately transmit to the circuit switching network.

As for encoded audio streams transmitted as audio packets to a packet switching network via a circuit switching network as aforementioned, realizing media communication after having minimized the number of transmitted audio packets at the media stream relay device interposed between the circuit switching network and the packet switching network is extremely effective in inhibiting the bandwidth and the number of packets, which are factors contributing to packet congestion and packet loss in packet switching networks.

The present invention was made in consideration of the above situation, and the object of the preferred embodiments is to realize media communication while suppressing the possibility of packet congestion and packet loss by limiting the bandwidth and the number of packets on a packet switching network. One method of realizing this with the present invention involves not transmitting audio packets representing silence from a source terminal on a packet switching network. In other words, the present invention provides both a recovery method that involves buffering in order to absorb fluctuation where only audio packets representing sound or noise information are received, and a method for sending only audio packets representing sound or noise information to a packet switching network, out of encoded audio streams received from a circuit switching network.

According to the first aspect of the present invention, there is provided a media stream relay device for connecting a circuit switching network and a packet switching network to transmit data streams for a plurality of media, which comprises; packet control means provided for said plurality of media respectively for receiving packets of the respective media from said packet switching network and extracting data streams for the respective media; stream processing means for processing respective data streams extracted by said packet control means for transmitting through said circuit switching network; and a multiplexer for multiplexing data streams processed by said stream processing means for transmitting to said circuit switching network; wherein said stream processing means include an audio control means for adjusting an output timing of an audio stream if the data amount of said audio stream is not enough for continuous transmission in said circuit switching network.

Said audio control means may preferably include a means for inserting an additional audio stream representing at least one of silence and noise information into said audio stream.

Said audio control means may includes a means for adjusting said output timing in accordance with at least one of header information of at least one of previous audio packets from which the previous audio stream is extracted, frame information of the previous audio stream, header information of at least one of next audio packets from which the next audio stream is extracted, and frame information of the next audio stream.

When audio packets are transmitted by means of the Real-time Transport Protocol (RTP), said means for adjusting may refer at least one of an M th bit, a sequence number and a timestamp of RTP header information.

According to the second aspect of the present invention, there is provided a media stream relay device for connecting a circuit switching network and a packet switching network to transmit data streams for a plurality of media, which comprises; a demultiplexer means for receiving multiplexed data streams from said circuit switching network and separating into respective data streams; and packetizing means provided for said plurality of media respectively for packetizing data streams for transmitting through said packet switching network; wherein said packetizing means include an audio packetizing means for packetizing audio streams representing sound or noise information and excepting audio streams representing silence.

When said circuit switching network and said packet switching network use the same audio encoding system in which sound and silence are encoded at different compression rates, said audio packetizing means may divide audio streams in accordance with frame information of the respective audio streams.

When said circuit switching network and said packet switching network use the same audio encoding system in which sound and silence are encoded at the same compression rate, said audio packetizing means may comprise; a decoder means for decoding audio streams separated by said demultiplexer means; a coder means for coding audio signals obtained by said decoding by means of an audio encoding system in which sound and silence are encoded at different compression rates; and divider means for dividing audio streams obtained by said coder means in accordance with frame information of the respective audio streams.

Said frame information may be transmitted within each audio stream or obtained from each audio stream at processing and associate one of sound, silence and noise information with each audio stream.

According to another aspect of the present invention, it is provided a media stream relay method for connecting a circuit switching network and a packet switching network to transmit data streams for a plurality of media, which comprises steps of; receiving packets from said packet switching network; extracting data streams for respective media; processing the extracted data streams for transmitting through said circuit switching network; and multiplexing the processed data streams for transmitting to said circuit switching network; wherein said processing step includes a step for adjusting an output timing of an audio stream if the data amount of said audio stream is not enough for continuous transmission in said circuit switching network.

Said output timing may be preferably adjusted by inserting an additional audio stream representing at least one of silence and noise information into said audio stream.

Said output timing may be adjusted in accordance with at least one of header information of at least one of previous audio packets from which the previous audio stream is extracted, frame information of the previous audio stream, header information of at least one of next audio packets from which the next audio stream is extracted, and frame information of the next audio stream.

When audio packets are transmitted by means of the Real-time Transport Protocol (RTP), said output timing may be adjusted in accordance with at least one of an M th bit, a sequence number and a timestamp of RTP header information.

According to the another aspect of the present invention, it is provided a media stream relay method for connecting a circuit switching network and a packet switching network to transmit data streams for a plurality of media, which comprises steps of; receiving multiplexed data streams from said circuit switching network; separating the received multiplexed data streams into respective data streams; and packetizing the separated data streams for transmitting through said packet switching network; wherein said packetizing step includes a audio processing step for packtizing audio streams representing sound or noise information and excepting audio streams representing silence.

When said circuit switching network and said packet switching network use the same audio encoding system in which sound and silence are encoded at different compression rates, said audio streams representing sound or noise information and said audio streams representing silence may be divided in accordance with frame information of the respective audio streams.

When said circuit switching network and said packet switching network use the same audio encoding system in which sound and silence are encoded at the same compression rate, said audio processing step may include steps of; decoding audio streams separated in said separating step; coding the decoded audio signals by means of an audio encoding system in which sound and silence are encoded at different compression rates; and dividing the coded audio streams in accordance with frame information of the respective audio streams.

According to another aspect of the present invention, there is provided a recording medium recorded with a computer-readable program for realizing functions corresponding to the above mentioned media stream relay device and method.

As described above, use of the present invention makes it possible to adjust the output from a buffer and to continuously transmit encoded audio streams to a circuit switching network with consideration given also to intermittent transmission in which packets representing silence are not transmitted from media communication terminals on the packet switching network.

Also, performing intermittent transmission based on sound and silence from a circuit switching network to a packet switching network enables media communication in which the bandwidth and the number of packets for transmission to the packet switching network have been limited, thereby making it possible to reduce the factors contributing to packet congestion and packet loss.

### BRIEF DESCRIPTION OF THE DRAWINGS

Preferred features of the present invention will now be described, by way of example only, with reference to the accompanying drawings, in which:-
Fig. 1 shows a network configuration implementing the present invention;
Fig. 2 is a block diagram of a media stream relay device according to first and second implementing modes of the present invention;
Fig. 3 is a flowchart showing an output adjustment process according to the second implementing mode of the present invention;
Fig. 4 is a flowchart showing an output adjustment process according to the second implementing mode of the present invention;
Fig. 5 is a block diagram of a media stream relay device according to a third implementing mode of the present invention; and
Fig. 6 is a block diagram of a media stream relay device according to a fourth implementing mode of the present invention.

### DETAILED DESCRIPTION OF THE PREFERRED EMBODIMENTS

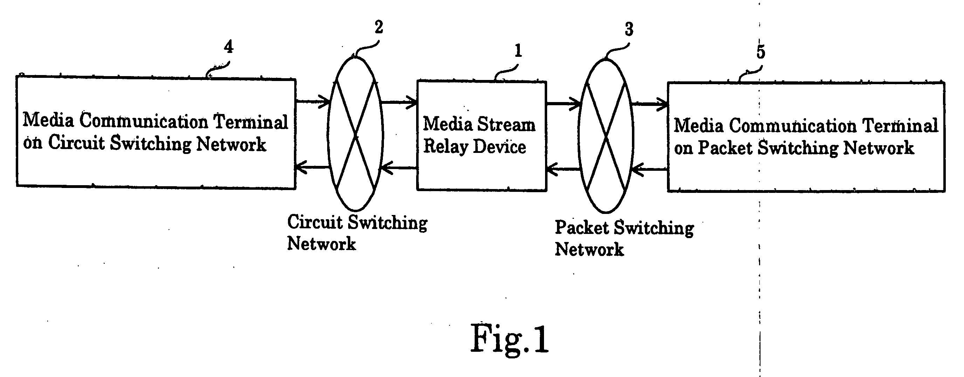

Best modes for implementing the present invention will be described below. Fig. 1 shows a network configuration implementing the present invention. As shown in Fig. 1, the present invention is media stream relay device 1 which connects circuit switching network 2 and packet switching network 3, and realizes media communication.

### First Implementing Mode

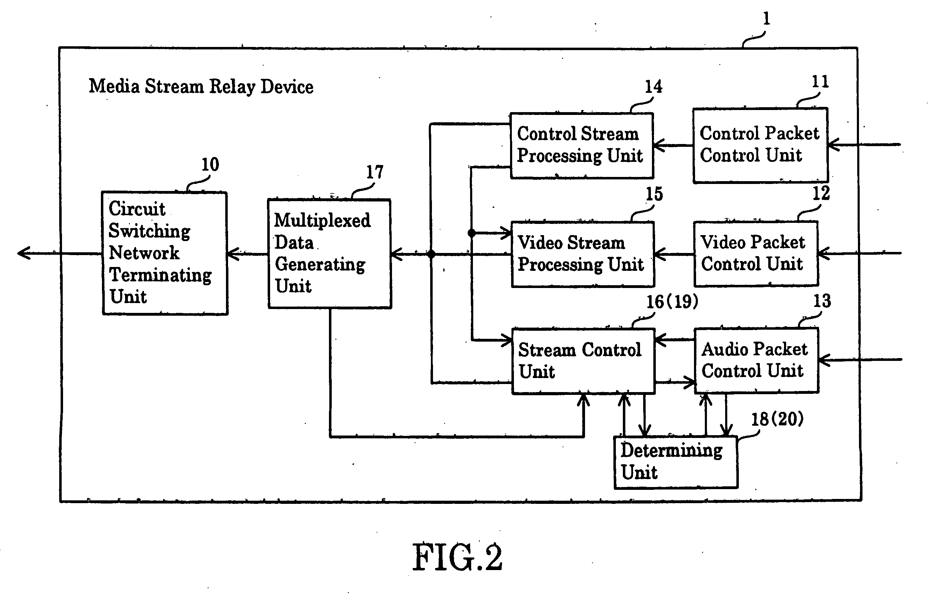

The configuration of the media stream relay device according to the first implementing mode of the present invention will be described with reference to Fig. 2. Fig. 2 is a block diagram of media stream relay device 1 according to the first embodiment mode, and shows the configuration for realizing media communication from packet switching network 3 to circuit switching network 2. As shown in Fig. 2, media stream relay device 1 of the first implementing mode includes audio packet control unit 13 which has a buffer (not shown) for absorbing fluctuation on packet switching network 3, and receives audio packets, extracts an encoded audio stream after having rearranged the received audio packets based on the header information of the packets, and stores the extracted encoded audio stream in the buffer, determining unit 18 which determines whether an encoded audio stream is acquirable from the buffer and outputs a determination result, stream control unit 16 which acquires encoded audio data from the buffer and outputs the acquired data where acquisition is possible based on the determination result, and generates and outputs an encoded audio stream representing silence or noise where acquisition is not possible, and multiplexed data generating unit 17 which multiplexes the encoded audio stream, and outputs multiplexed data to the circuit switching network.

### First Embodiment

An embodiment of the present implementing mode will be described next as the first embodiment of the present invention, with reference to the drawings. As shown in Fig. 1, media stream relay device 1 is positioned between circuit switching network 2 and packet switching network 3, and realizes two-way media communication between media communication terminal 4 on circuit switching network 2 and media communication terminal 5 on packet switching network 3 by terminating the communication protocol of both networks and connecting calls. Note that while this embodiment involves two-way communication, the present invention is not particularly limited to this implementing mode, and may be a mode of media communication between a circuit switching network and a packet switching network aimed at providing a one-way media distribution service from one network to the other.

The following description relates to the processing of media streams by media stream relay device 1 from packet switching network 3 to circuit switching network 2. Circuit switching network terminating unit 10 in media stream relay device 1 functions to terminate circuit switching network 2, and to receive multiplexed data from multiplexed data generating unit 17 (described later) and output the multiplexed data to circuit switching network 2. Note that circuit switching network terminating unit 10 also functions to receive data from circuit switching network 2, as discussed below.

On the other hand, media stream relay device 1 includes control packet control unit 11, video packet control unit 12 and audio packet control unit 13 for terminating packet switching network 3, and rearranges packets arriving from packet switching network 3 (here, the RTP protocol is assumed) based on sequence numbers, timestamps, or the like.

Control packet control unit 11 receives control packets from packet switching network 3, extracts an encoded control stream after rearranging the control packets, and outputs the encoded control stream to control stream processing unit 14. Similarly, video packet control unit 12 receives video packets from packet switching network 3, extracts an encoded video stream after rearranging the video packets, and outputs the encoded video stream to video stream processing unit 15.

Note that audio packet control unit 13 has a buffer for accumulating a fixed amount of audio packet data in order to absorb fluctuation on packet switching network 3. During the rearranging process, encoded audio data is extracted from the received audio packets and stored in the buffer paired with the assigned header information, and target encoded audio data is then output in response to requests from stream control unit 16.

Control stream processing unit 14 analyzes the encoded control stream, acquires the call control information of packet switching network 3, and outputs an encoded stream that is based on the call control information required in call connection with circuit switching network 2 to multiplexed data generating unit 17. Video stream processing unit 15 analyzes the encoded video stream, converts the encoded video stream to the video encoding system of circuit switching network 2 if necessary, and outputs the encoded video stream to multiplexed data generating unit 17.

Note that the present invention is not particularly limited in relation to the type of call control system or whether the conversion process using the video encoding system is implemented, provided the system is able to terminate the video encoding system and the call connection with both packet switching network 3 and circuit switching network 2. While the present embodiment adopts a configuration that also includes video processing, the present invention is not particularly limited to this, and may adopt a configuration that does not include video, that is, a configuration that does not include video packet control unit 12 or video stream processing unit 15.

Stream control unit 16 makes inquiries to determining unit 18 as to whether an encoded audio stream is acquirable from audio packet control unit 13, based on periodical request instructions from multiplexed data generating unit 17.

As aforementioned, received audio packets are stored in the buffer of audio packet control unit 13 after having been reordered in accordance with the header information (here, an RTP header is assumed, and includes information such as sequence numbers, timestamps, etc.). Determining unit 18 checks the data at head of the buffer in response to an inquiry from stream control unit 16, and returns a determination result as to whether acquisition is possible. Where it is determined that an encoded audio stream is acquirable, stream control unit 16 acquires the encoded audio stream from audio packet control unit 13, and outputs the acquired stream to multiplexed data generating unit 17. On the other hand, where it is determined that acquisition is not possible, stream control unit 16 does not acquire the target encoded audio stream but instead generates an encoded audio stream representing silence or noise, and outputs the generated stream to multiplexed data generating unit 17.

Note that where the audio encoding systems of both packet switching network 3 and circuit switching network 2 are the same, either an encoded stream representing silence or noise information provided in the audio encoding system or a device specific encoded stream may be used for encoded audio streams representing one of silence and noise information generated by stream control unit 16. Where the audio encoding systems of both packet switching network 3 and circuit switching network 2 are different, an encoded audio stream for outputting to circuit switching network 2 is generated by converting an input encoded audio stream, or specifically by decoding an input encoded stream and encoding the output of the decoding, although the present invention is not particularly limited in this respect.

Example of cases in which determining unit 18 determines that acquisition is not possible are given below.
(1) The buffer in audio packet control unit 13 is in the process of accumulating a fixed amount of data to absorb fluctuation on the packet switching network. This also includes the case where the buffer runs empty during communication.
(2) Encoded audio data is not stored at the head of the buffer when an acquisition request is received from stream control unit 16 due to packet loss or delay in packet switching network 3.
(3) A relevant encoded audio stream does not exist after rearranging or disposing the received audio packets in accordance with the RTP header information (Mbits, sequence numbers, timestamps, etc.) as a result of not receiving audio packets representing silence because the transmission specification of media communication terminal 5, which is the source device in this case, conforms to intermittent transmission for transmitting only sound (and also noise depending on the audio encoding system).

Note that in (1) above, during the period before media stream relay device 1 initially receives audio packets after the start of communication, stream control unit 16 may output an encoded stream representing silence to circuit switching network 2 or withhold output until audio packets are initially received.

Multiplexed data generating unit 17 multiplexes encoded control, video and audio streams acquired respectively from control stream processing unit 14, video stream processing unit 15 and stream control unit 16, and outputs the multiplexed data to circuit switching network terminating unit 10. Note that multiplexing is possible even if all of the encoded streams cannot be acquired, and that output is performed after adding predetermined unique data if the bandwidth at the time of output has not been satisfied.

### Second Implementing Mode

The block configuration of media stream relay device 1 according to the second implementing mode of the present invention is the same as the block configuration according to the first implementing mode of the present invention shown in Fig. 2, although the reference numerals of the stream control unit and the determining unit (in parentheses) have been changed from the first implementing mode since their respective functions are different from the first implementing mode.

Media stream relay device 1 according to the second implementing mode of the present invention includes audio packet control unit 13 which has a buffer for absorbing fluctuation on packet switching network 3, and receives audio packets, extracts an encoded audio stream after having rearranged the received audio packets based on the header information of the packets, and stores the extracted encoded audio stream in the buffer, determining unit 20 which determines whether an encoded audio stream is acquirable from the buffer and outputs a determination result, stream control unit 19 which adjusts the output timing by generating and outputting an encoded audio stream representing one of silence and noise information based on the determination result, the header information originally assigned to previous encoded audio streams, and the header information assigned to the target encoded audio stream, and/or adjusts the output timing by generating and outputting an encoded audio stream representing one of silence and noise information based on the determination result, frame information for previous encoded audio streams, and frame information for the target encoded audio stream, and multiplexed data generating unit 17 which multiplexes the encoded audio stream, and outputs multiplexed data to the circuit switching network 2.

### Second Embodiment

An embodiment of the present implementing mode will be described next as the second embodiment of the present invention with reference to the drawings, focusing only on the differences from the first embodiment of the present invention.

The present embodiment includes stream control unit 19 and determining unit 20 in place of stream control unit 16 and determining unit 18 in Fig. 1. Determining unit 20 sequentially collects at least one of the frame information for the next encoded audio stream to be output from the buffer and the header information of the audio packets from audio packet control unit 13, and the frame information for encoded audio streams previously output and the header information originally assigned to encoded audio data previously output from stream control unit 19, checks the buffer of audio packet control unit 13 in response to an inquiry from stream control unit 19, and returns a determination result as to whether the next encoded audio stream to be output is acquirable.

Frame information here indicates information that is distinguishable into at least the two types of sound and silence, and possibly noise as a third type depending on the encoding system. Note that the frame information may be included as identification information in the encoded audio stream, or refer to the data size of an encoded audio stream or the output result of a determination process that enables an equivalent distinction to be made. The present invention is not particularly limited in this respect.

Note that it is envisaged that the buffer of audio packet control unit 13 will frequently run empty in the case of intermittent transmission in which media communication terminal 5 on packet switching network 3 transmits only audio packets that contain an encoded audio stream representing sound or noise (this depends also on the buffer size setting in media stream relay device 1). The method described in the present embodiment is primarily designed as an output timing adjustment method for dealing with such cases.

The determination method implemented by determining unit 20 uses at least one of RTP header information and frame information for encoded audio streams. Where an audio packet fails to arrive continuously after the buffer in audio packet control unit 13 has run empty, stream control unit 19 generates and outputs encoded audio data representing silence, as aforementioned. Determining unit 20 further considers at least one of the RTP header information of the audio packet that initially arrives or the frame information of the encoded audio stream contained in the audio packet as judgment information for determining whether an encoded audio stream is acquirable.

Where it is determined that acquisition is possible (to not inhibit output), stream control unit 19 acquires the encoded audio stream from audio packet control unit 13 and outputs the acquired stream to multiplexed data generating unit 17. On the other hand, where it is determined that acquisition is not possible (to inhibit output), stream control unit 19 does not acquire the encoded audio stream but instead generates an encoded audio stream representing silence or noise and outputs the generated stream to multiplexed data generating unit 17.

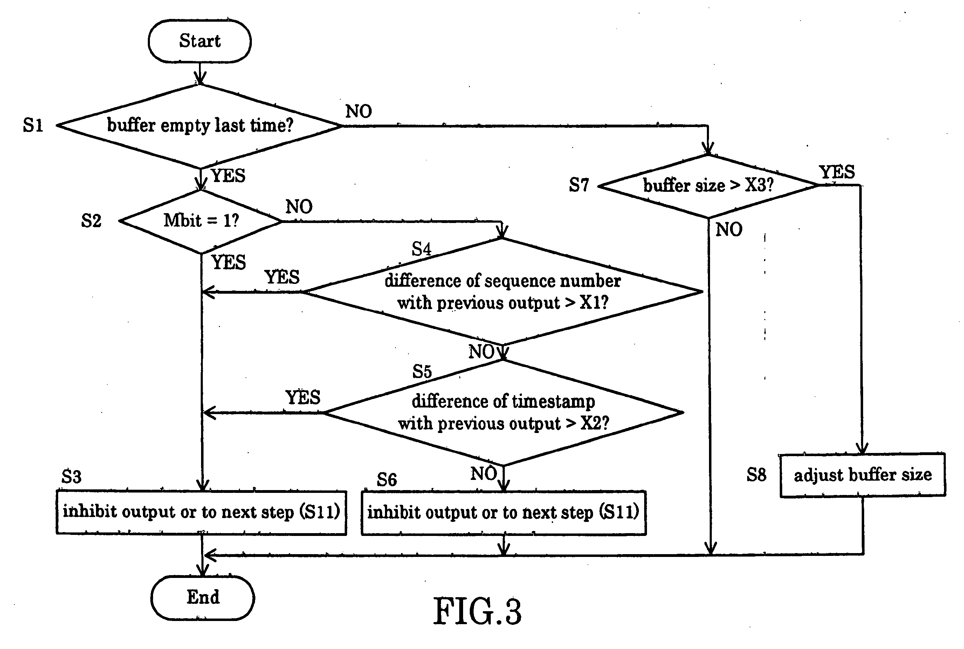

The processing flow based on the RTP header information judged by determining unit 20 will be described next with reference to Fig. 3. In other words, determining unit 20 is assumed to have received an acquisition request from stream control unit 19, in a state in which the encoded audio stream contained in received audio packets is being held subsequent to the buffer in audio packet control unit 13 running empty.

S1: Determining unit 20 judges whether the buffer was empty last time. If the buffer was empty, processing proceeds to S2, and if the buffer was not empty, processing proceeds to S7.

S2: Determining unit 20 checks the Mbit of the RTP header information. If 1, processing proceeds to S3, and if not 1, processing proceeds to S4. Note that while the processing flow in the present embodiment includes this determination, it may be omitted, in which case processing proceeds from S1 (YES) to S4.

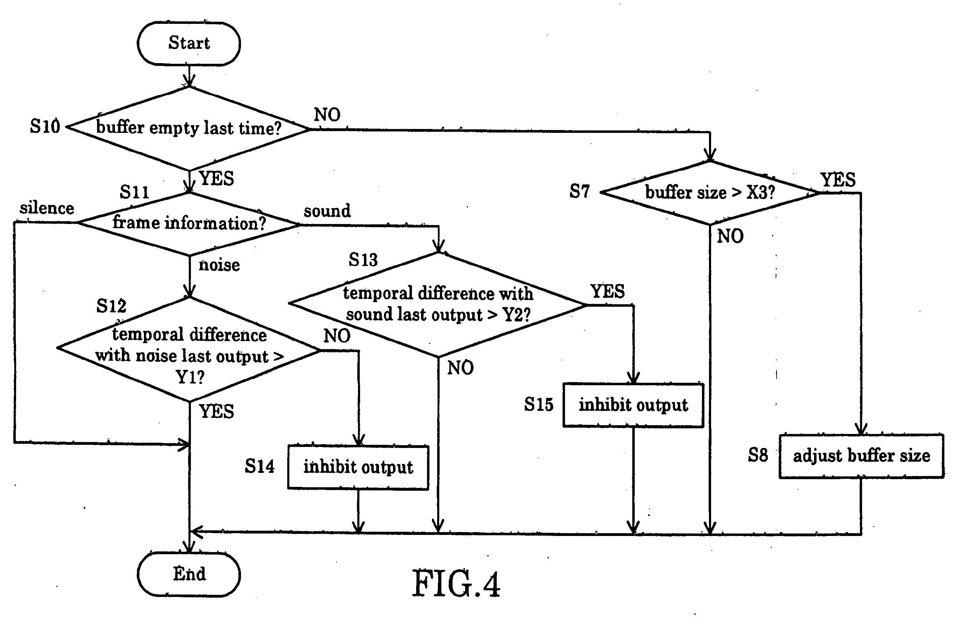

S3: Determining unit 20 returns a result that acquisition is not possible. In view of this, processing moves to a buffer accumulation process for absorbing fluctuation, whereby output from audio packet control unit 13 is inhibited until a preset fixed amount of data accumulates in the buffer or a fixed time period elapses. This processing is also implemented when the determination process using frame information (S11 in Fig. 4) is included, as described later.

S4: Determining unit 20 calculates the difference between the sequence numbers of encoded audio streams previously output by stream control unit 19 and the sequence number of the target encoded audio stream. Note that here the target encoded audio stream is the encoded audio stream to be output in the case where it is determined that output is possible. Where the absolute value of the difference exceeds threshold X1, processing returns to S3, and where the absolute value of the difference does not exceed threshold X1, processing proceeds to S5.

S5: Determining unit 20 calculates the difference between the timestamps of encoded audio streams output by stream control unit 19 and the timestamp of the target encoded audio stream. If the absolute value of the difference exceeds threshold X2, processing returns to S3, and if the absolute value of the difference does not exceed threshold X2, processing proceeds to S6.

S6: Determining unit 20 calculates a value as the difference of the number of times stream control unit 19 has already generated an encoded audio stream representing silence or noise from a conversion value obtained by converting the difference calculated in S5 into an equivalent number of frames in processing units based on the audio encoding system being used. If the value is positive, determining unit 20 returns a result that acquisition is not possible for the equivalent number of times including this time when an acquisition request is received from stream control unit 19, and output of the encoded audio stream in the buffer to multiplexed data generating unit 17 is inhibited. During this interval, stream control unit 19 generates an encoded audio stream representing one of silence and noise and outputs the generated stream to multiplexed data generating unit 17.

On the other hand, if the value is negative, determining unit 20 returns a result that acquisition is not possible, and in view of this, processing moves to the buffer accumulation process for absorbing fluctuation, whereby output from audio packet control unit 13 is inhibited until a preset fixed amount of data accumulates in the buffer or a fixed time period elapses. During this interval, stream control unit 19 instead generates an encoded audio stream representing one of silence and noise information, and outputs the generated stream to multiplexed data generating unit 17. Where the determination process using frame information (described later) is included, processing is performed in accordance with a final result obtained by further implementing the determination process based on frame information (S11 in Fig. 4).

S7: Determining unit 20 checks whether the target buffer size exceeds X3. If more than X3, determining unit 20 returns a result that acquisition is possible after having reduced the buffer size (S8), and the encoded audio stream positioned at the head of the adjusted buffer is output from audio packet control unit 13 to multiplexed data generating unit 17 via stream control unit 19. If the target buffer size does not exceed X3, determining unit 20 returns a result that acquisition is possible (S7), and the encoded audio stream is output from audio packet control unit 13 to multiplexed data generating unit 17 via stream control unit 19.

Note that the order in which the reduction adjustment and the output from audio packet control unit 13 are implemented may be reversed, and that the reduction adjustment may be implemented by discarding encoded streams in order from the oldest, or by preferentially discarding encoded streams representing at least one of silence and noise information. Note also that thresholds X1 and X2 in the flowchart may be updated sequentially according to the arrival interval between successive packets, and that threshold X3 may vary dynamically according similarly to the arrival interval between successive packets, as well as the packet loss rate, fluctuation or the like on the packet switching network.

As a result of the above series of judgments, determining unit 20 returns a judgment result to stream control unit 19, which adjusts the output timing of packets received after the buffer ran empty based on this judgment result. If there is no output, stream control unit 19 generates an encoded audio stream representing silence and outputs the generated stream to multiplexed data generating unit 17.

The processing flow based on frame information further judged by determining unit 20 will be described next with reference to Fig. 4. In other words, determining unit 20 is assumed to have received an acquisition request from stream control unit 19, in a state in which the encoded audio stream contained in received audio packets is being held subsequent to the buffer in audio packet control unit 13 running empty. Note that the invention using the processing flow based on frame information may be applied after the aforementioned processing based on RTP header information, or adopted as a judgment method based solely on frame information.

S10: Determining unit 20 judges whether the buffer was empty last time. If the buffer was empty, processing proceeds to S11, and if the buffer was not empty, processing proceeds to the aforementioned S7. Note that where the processing flow shown in Fig. 4 is applied after the aforementioned processing based on RTP header information, this judgment may be omitted, in which case processing starts from S11.

S11: Determining unit 20 checks the frame information of the encoded audio stream. If sound, processing proceeds to S13, and if silence, determining unit 20 returns a result that acquisition is possible to stream control unit 19, which immediately acquires the encoded audio stream from audio packet control unit 13, and outputs the acquired stream to multiplexed data generating unit 17. Depending on the encoding system, there may also be frame information for noise information, in which case processing proceeds to S12.

S12: Determining unit 20 calculates the temporal difference from the last encoded audio stream representing noise information previously output by stream control unit 19. If the difference exceeds threshold Y1, determining unit 20 returns a result that acquisition is possible to stream control unit 19, which immediately acquires the encoded audio stream from audio packet control unit 13, and outputs the acquired stream to multiplexed data generating unit 17. If the difference does not exceed threshold Y1, processing proceeds to S14.

S13: Determining unit 20 calculates the temporal difference from the last encoded audio stream representing sound previously output by stream control unit 19. If the difference does not exceed threshold Y2, determining unit 20 returns a result that acquisition is possible to stream control unit 19, which immediately acquires the encoded audio stream from audio packet control unit 13, and outputs the acquired stream to multiplexed data generating unit 17. If the difference does exceed threshold Y2, processing proceeds to S15.

S14: Determining unit 20 checks how much times has passed since an encoded audio stream representing noise was last output, and calculates the time difference from the transmission cycle time of encoded noise information streams encoded with the audio encoding system being used. Determining unit 20 further calculates a divided time difference by dividing the calculated time difference by the processing unit of the audio encoding system being used. If the divided time difference is positive, output of the encoded audio stream is inhibited for a number of times equivalent to that value. In the interval during which output is inhibited, stream control unit 19 generates an encoded audio stream representing one of silence and noise, and outputs the generated stream to multiplexed data generating unit 17.

On the other hand, if the divided time difference is negative, determining unit 20 returns a result that acquisition is not possible to stream control unit 19, and processing moves to the buffer accumulation process for absorbing fluctuation, whereby output from audio packet control unit 13 is inhibited until a preset fixed amount of data accumulates in the buffer or a fixed time period elapses. During this interval, stream control unit 19 instead generates an encoded audio stream representing one of silence and noise information, and outputs the generated stream to multiplexed data generating unit 17.

S15: Processing moves to the buffer accumulation process for absorbing fluctuation, whereby output from audio packet control unit 13 is inhibited until a preset fixed amount of data accumulates in the buffer or a fixed time period elapses. During this interval, stream control unit 19 instead generates an encoded audio stream representing one of silence and noise information, and outputs the generated stream to multiplexed data generating unit 17.

Note that in S14 and S15 above, apart from immediately outputting the target encoded audio stream when notified that acquisition is possible, stream control unit 19 may discard the target encoded audio stream and output the following encoded audio stream.

Also, threshold Y1 in the above processing flow is, as a general rule, preferably determined based on the specifications of the audio encoding system used, although this threshold may be updated sequentially according to the arrival interval between successive packets. Threshold Y2 preferably is not set to an excessively large value, and may be set based also on the RTP header information.

According to the method described above, more preferable media communication can be expected by appropriately generating encoded audio streams representing silence, outputting the generated streams, and adjusting the output timing, in the case of intermittent transmission in which only encoded audio streams representing sound, or possibly noise depending on the encoding system, are transmitted from source media communication terminal 5 on packet switching network 3.

### Third Implementing Mode

The third implementing mode of the present invention is a computer program that causes a general-purpose information processing apparatus to realize functions corresponding to media stream relay device 1 of the above embodiments by being installed on the information processing apparatus. This program is able to cause the general-purpose information processing apparatus to realize functions corresponding to media stream relay device 1 of the above embodiments by being installed on the information processing apparatus via a recording medium onto which the program has been recorded, or by being installed on the information processing apparatus via a communication line.

The present invention makes it possible to realize media communication after having limited the number of audio packets for transmission as much as possible at a media stream relay device interposed between a circuit switching network and a packet switching network. It is thereby possible to contribute to improving service quality and enhancing convenience for both network providers and network users.

While the present invention has been described in its preferred embodiments, it is to be understood that the words which have been used are words of description rather than limitation, and that changes may be made to the invention without departing from its scope as defined by the appended claims.

Each feature disclosed in this specification (which term includes the claims) and/or shown in the drawings may be incorporated in the invention independently of other disclosed and/or illustrated features.

## Claims

1. A media stream relay device for connecting a circuit switching network (2) and a packet switching network (3) to transmit data streams for a plurality of media, which comprises;
packet control means (11, 12, 13) provided for said plurality of media respectively for receiving packets of the respective media from said packet switching network and extracting data streams for the respective media;
stream processing means (14, 15, 16, 19) for processing respective data streams extracted by said packet control means for transmitting through said circuit switching network; and
a multiplexer (17) for multiplexing data streams processed by said stream processing means for transmitting to said circuit switching network;
which is **characterized in that**;
said stream processing means (14, 15, 16, 19) include an audio control means (16, 19) for adjusting an output timing of an audio stream if the data amount of said audio stream is not enough for continuous transmission in said circuit switching network (2); and
said audio control means includes a means (18, 20) for adjusting said output timing in accordance with at least one of header information of at least one of previous audio packets from which the previous audio stream is extracted, frame information of the previous audio stream, header information of at least one of next audio packets from which the next audio stream is extracted, and frame information of the next audio stream.

2. The media stream relay device claimed in claim 1, wherein said audio control means includes a means for inserting an additional audio stream representing at least one of silence and noise information into said audio stream.

3. The media stream relay device claimed in claim 1, wherein audio packets are transmitted by means of the Real-time Transport Protocol (RTP) and said means for adjusting refers at least one of an M th bit, a sequence number and a timestamp of RTP header information.

4. A media stream relay method for connecting a circuit switching network (2) and a packet switching network (3) to transmit data streams for a plurality of media, which comprises steps of;
receiving packets from said packet switching network (3);
extracting data streams for respective media;
processing the extracted data streams for transmitting through said circuit switching network (2); and
multiplexing the processed data streams for transmitting to said circuit switching network;
which is **characterized in that**;
said processing step includes a step for adjusting an output timing of an audio stream if the data amount of said audio stream is not enough for continuous transmission in said circuit switching network (2), wherein said output timing is adjusted in accordance with at least one of header information of at least one of previous audio packets from which the previous audio stream is extracted, frame information of the previous audio stream, header information of at least one of next audio packets from which the next audio stream is extracted, and frame information of the next audio stream.

5. The media stream relay method claimed in claim 4, wherein said output timing is adjusted by inserting an additional audio stream representing at least one of silence and noise information into said audio stream.

6. The media stream relay method claimed in claim 4, wherein audio packets are transmitted by means of the Real-time Transport Protocol (RTP) and said output timing is adjusted in accordance with at least one of an M th bit, a sequence number and a timestamp of RTP header information.

## Patentansprüche

1. Mediendatenstromrelaisvorrichtung zum Verbinden eines Durchschaltenetzes (2) und eines Paketvermittlungsnetzes (3) zum Übertragen von Datenströmen für mehrere Medien, mit:
Paketsteuerungseinrichtungen (11, 12, 13), die für die jeweiligen mehreren Medien bereitgestellt werden, zum Empfangen von Paketen der jeweiligen Medien vom Paketvermittlungsnetz und zum Extrahieren von Datenströmen für die jeweiligen Medien;
Datenstromverarbeitungseinrichtungen (14, 15, 16, 19) zum Verarbeiten jeweiliger Datenströme, die durch die Paketsteuerungseinrichtungen extrahiert werden, für eine Übertragung über das Durchschaltenetz; und
einem Multiplexer (17) zum Multiplexen von durch die Datenstromverarbeitungseinrichtungen verarbeiteten Datenströmen für eine Übertragung zum Durchschaltenetz;
**dadurch gekennzeichnet, dass**
die Datenstromverarbeitungseinrichtungen (14, 15, 16, 19) eine Audiosteuerungseinrichtung (16, 19) zum Einstellen einer Ausgabezeit eines Audiodatenstroms aufweisen, wenn die Datenmenge des Audiodatenstroms für eine kontinuierliche Übertragung im Durchschaltenetz (2) nicht ausreichend ist; und
die Audiosteuerungseinrichtung eine Einrichtung (18, 20) zum Einstellen der Ausgabezeit gemäß mindestens einer der folgenden Informationen aufweist: einer Header-Infonnation mindestens eines von vorangehenden Audiopaketen, von denen der vorangehende Audiodatenstrom extrahiert wird, Rahmeninformation des vorangehenden Audiodatenstroms, Header-Information mindestens eines von nächsten Audiopaketen, von denen der nächste Audiodatenstrom extrahiert wird, und Rahmeninformation des nächsten Audiodatenstroms.

2. Vorrichtung nach Anspruch 1, wobei die Audiosteuerungseinrichtung eine Einrichtung zum Einfügen eines zusätzlichen Audiodatenstroms, der Lautlos- und/oder Toninformation darstellt, in den Audiodatenstrom aufweist.

3. Vorrichtung nach Anspruch 1, wobei Audiopakete durch RTP (Real-time Transport Protocol) übertragen werden und die Einstelleinrichtung auf ein M-tes Bit und/oder eine Sequenznummer und/oder einen Zeitstempel von RTP-Header-Information Bezug nimmt.

4. Mediendatenstromrelaisverfahren zum Verbinden eines Durchschaltenetzes (2) und eines Paketvermittlungsnetzes (3) zum Übertragen von Datenströmen für mehrere Medien, mit den Schritten:
Empfangen von Paketen vom Paketvermittlungsnetz (3);
Extrahieren von Datenströmen für jeweilige Medien;
Verarbeiten der extrahierten Datenströme für eine Übertragung über das Durchschaltenetz (2); und
Multiplexen der verarbeiteten Datenströme für eine Übertragung zum Durchschaltenetz;
**dadurch gekennzeichnet, dass**
der Verarbeitungsschritt einen Schritt zum Einstellen einer Ausgabezeit eines Audiodatenstroms aufweist, wenn die Datenmenge des Audiodatenstroms für eine kontinuierliche Übertragung im Durchschaltenetz (2) nicht ausreicht, wobei der Ausgabezeitpunkt gemäß mindestens einer der folgenden Informationen eingestellt wird: einer Header-Infonnation mindestens eines von vorangehenden Audiopaketen, von denen der vorangehende Audiodatenstrom extrahiert wird, Rahmeninformation des vorangehenden Audiodatenstroms, Header-Infonnation mindestens eines von nächsten Audiopaketen, von denen der nächste Audiodatenstrom extrahiert wird, und Rahmeninformation des nächsten Audiodatenstroms.

5. Verfahren nach Anspruch 4, wobei die Ausgabezeit durch Einfügen eines zusätzlichen Audiodatenstroms, der Lautlos- und/oder Toninformation darstellt, in den Audiodatenstrom eingestellt wird.

6. Verfahren nach Anspruch 4, wobei Audiopakete durch RTP (Real-time Transport Protocol) übertragen werden und die Ausgabezeit gemäß einem M-ten Bit und/oder einer Sequenznummer und/oder einem Zeitstempel von RTP-Header-Information eingestellt wird.

## Revendications

1. Dispositif de relais de flux de média pour connecter un réseau de commutation de circuits (2) et un réseau de commutation de paquets (3) pour transmettre des flux de données pour une pluralité de médias, qui comprend :
des moyens de commande de paquet (11, 12, 13) pourvus pour ladite pluralité de médias respectivement pour recevoir des paquets du média respectif en provenance dudit réseau de commutation de paquets et extraire des flux de données pour le média respectif ;
des moyens de traitement de flux (14, 15, 16, 19) pour traiter des flux de données respectifs extraits par lesdits moyens de commande de paquet pour la transmission à travers ledit réseau de commutation de circuits ; et
un multiplexeur (17) pour multiplexer des flux de données traités par lesdits moyens de traitement de flux pour la transmission audit réseau de commutation de circuits ;
qui est **caractérisé en ce que** :
lesdits moyens de traitement de flux (14, 15, 16, 19) incluent un moyen de commande audio (16, 19) pour ajuster un positionnement temporel de sortie d'un flux audio si la quantité de données dudit flux audio n'est pas suffisante pour la transmission continue dans ledit réseau de commutation de circuits (2) ; et
ledit moyen de commande audio inclut un moyen (18, 20) pour ajuster ledit positionnement temporel de sortie conformément à au moins une parmi des informations d'en-tête d'au moins un de paquets audio précédents desquels le flux audio précédent est extrait, des informations de trame du flux audio précédent, des informations d'en-tête d'au moins un de paquets audio suivants desquels le flux audio suivant est extrait, et des informations de trame du flux audio suivant.

2. Dispositif de relais de flux de média selon la revendication 1, dans lequel ledit moyen de commande audio comprend un moyen pour insérer un flux audio additionnel représentant au moins une d'informations de silence et de bruit dans ledit flux audio.

3. Dispositif de relais de flux de média selon la revendication 1, dans lequel des paquets audio sont transmis au moyen du Protocole de transport en temps réel (RTP) et lesdits moyens pour ajuster se réfèrent à au moins un parmi un M ième bit, un numéro de séquence et une estampille temporelle d'informations d'en-tête RTP.

4. Procédé de relais de flux de média pour connecter un réseau de commutation de circuits (2) et un réseau de commutation de paquets (3) pour transmettre des flux de données pour une pluralité de médias, qui comprend des étapes de:
réception de paquets en provenance dudit réseau de commutation de paquets (3) ;
extraction de flux de données pour un média respectif ;
traitement des flux de données extraits pour la transmission à travers ledit réseau de commutation de circuits (2) ; et
multiplexage des flux de données traités pour la transmission audit réseau de commutation de circuits ;
qui est **caractérisé en ce que** :
ladite étape de traitement inclut une étape pour ajuster un positionnement temporel de sortie d'un flux audio si la quantité de données dudit flux audio n'est pas suffisante pour la transmission continue dans ledit réseau de commutation de circuits (2), où ledit positionnement temporel de sortie est ajusté conformément à au moins une parmi des informations d'en-tête d'au moins un de paquets audio précédents desquels le flux audio précédent est extrait, des informations de trame du flux audio précédent, des informations d'en-tête d'au moins un de paquets audio suivants desquels le flux audio suivant est extrait, et des informations de trame du flux audio suivant.

5. Procédé de relais de flux de média selon la revendication 4, dans lequel ledit positionnement temporel de sortie est ajusté en insérant un flux audio additionnel représentant au moins une d'informations de silence et de bruit dans ledit flux audio.

6. Procédé de relais de flux de média selon la revendication 4, dans lequel des paquets audio sont transmis au moyen du Protocole de transport en temps réel (RTP) et ledit positionnement temporel de sortie est ajusté conformément à au moins un parmi un M ième bit, un numéro de séquence et une estampille temporelle d'informations d'en-tête RTP.
